# EUROPÄISCHE PATENTSCHRIFT

(11) **EP 1 575 799 B1**
(45) Veröffentlichungstag und Bekanntmachung des Hinweises auf die Patenterteilung: **25.10.2006**
(21) Anmeldenummer: 03797955.6
(22) Anmeldetag: 19.05.2003
(51) Int. Cl.: B60K 31/00

(54) **VORRICHTUNG ZUR ADAPTIVEN ABSTANDS- UND GESCHWINDIGKEITSREGELUNG MIT RUCKBEGRENZUNG**
DEVICE FOR ADAPTIVE DISTANCE AND SPEED CONTROL WITH JERK LIMITATION
DISPOSITIF DE REGULATION ADAPTATIVE DE DISTANCE ET DE VITESSE AVEC LIMITATION DE SECOUSSE

(30) Priorität: 02.11.2002 DE 10251037
(43) Veröffentlichungstag der Anmeldung: 21.09.2005
(73) Patentinhaber: ROBERT BOSCH GMBH, 70442 Stuttgart (DE)
(72) Erfinder: UHLER, Werner, 76646 Bruchsal (DE); WEILKES, Michael, 74343 Sachsenheim (DE); SCHERL, Michael, 71679 Asperg (DE); MICHI, Harald, 75248 Oelbronn-Duerrn (DE)
(86) Internationale Anmeldenummer: PCT/DE2003/001603
(87) Internationale Veröffentlichungsnummer: WO 2004/041579

(56) Entgegenhaltungen:
- DE-A- 10 019 190
- WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X in der Anmeldung erwähnt

## Beschreibung

### Stand der Technik

Die Erfindung betrifft eine Vorrichtung zur adaptiven Abstands- und Geschwindigkeitsregelung bei Kraftfahrzeugen, wie sie zum Beispiel in SAE-Paper Nr. 96 10 10 "Adaptive Cruise Control, System Aspects and Development Trends", Winner et al., 1996 beschrieben wird. Eine solche Vorrichtung, die auch als ACC-System (Adaptive Cruise Control) bezeichnet wird, ermöglicht es, die Geschwindigkeit des Fahrzeugs automatisch auf eine vom Fahrer gewählte Wunschgeschwindigkeit zu regeln. Darüber hinaus werden vor dem Fahrzeug befindliche Objekte mit Hilfe einer Sensoreinrichtung, beispielsweise mit Hilfe eines Radarsensors erfaßt, und wenn die Sensoreinrichtung ein Zielobjekt, typischerweise ein unmittelbar auf der eigenen Fahrspur vorausfahrendes Fahrzeug ortet, wird die Geschwindigkeit des eigenen Fahrzeugs erforderlichenfalls durch Eingriff in Stellelemente des Antriebs- und/oder Bremssystems so reduziert, daß das Zielobjekt in einem bestimmten Sicherheitsabstand verfolgt wird. Dieser Abstand ist geschwindigkeitsabhängig und wird beispielsweise durch eine vom Fahrer innerhalb bestimmter Grenzen wählbare Zeitlücke bestimmt, die angibt, in welchem zeitlichen Abstand das eigene Fahrzeug dem vorausfahrenden Fahrzeug folgt.

Mit Hilfe des Radarsensors kann nicht nur der Abstand, sondern auch die Relativgeschwindigkeit des vorausfahrenden Fahrzeugs direkt gemessen werden. Wahlweise läßt sich die Relativgeschwindigkeit auch durch zeitliche Ableitung des gemessenen Abstands bestimmen. Wenn die Absolutgeschwindigkeit des vorausfahrenden Fahrzeugs, also die Summe aus der Eigengeschwindigkeit V des geregelten Fahrzeugs und der gemessenen Relativgeschwindigkeit Vr, über die vom Fahrer gewählte Wunschgeschwindigkeit Vset zunimmt, wird die im Rahmen der Abstandsregelung berechnete Sollgeschwindigkeit Vsoll des eigenen Fahrzeugs auf die Wunschgeschwindigkeit Vset begrenzt. Wenn das eigene Fahrzeug mit der Wunschgeschwindigkeit Vset fährt und sich einem langsameren vorausfahrenden Fahrzeug annähert, so sorgt die Abstandsregelfunktion dafür, daß bei Unterschreitung eines gewissen, von der Relativgeschwindigkeit abhängigen Abstands die Eigengeschwindigkeit V allmählich, unter Berücksichtigung des Fahrkomforts reduziert wird, so daß die Eigengeschwindigkeit an die Geschwindigkeit des vorausfahrenden Fahrzeugs angepaßt wird, während der Abstand zum vorausfahrenden Fahrzeug auf den durch die Zeitlücke bestimmten Wert abnimmt.

Zur Erhöhung des Fahrkomforts weisen die bekannten ACC-Systeme einen sogenannten Ruckbegrenzer auf, der die an die Stellelemente ausgegebenen Stellgrößen und/oder deren zeitliche Änderungen begrenzt. Beispielsweise hat der Ruckbegrenzer die Funktion, die durch die Stellgrößen repräsentierten positiven oder negativen Sollbeschleunigungen und deren zeitliche Ableitungen zu begrenzen, so daß abrupte Übergänge vermieden und eine ruckfreie, als komfortabel empfundene Fahrweise erreicht wird. Ein solches ACC-System ist aus DE 100 19 190 A bekannt.

Es sind auch Fahrzeugführungssysteme vorgeschlagen worden, die, gegebenenfalls in Kombination mit einem ACC-System, eine sogenannte Crash-Mitigation-Funktion aufweisen, die bei einer drohenden Kollision mit einem anderen Fahrzeug automatisch eine Vollbremsung einleitet, selbstverständlich ohne Ruckbegrenzung, damit die Kollision noch vermieden werden kann oder zumindest die Folgen der Kollision gemildert werden können.

### Vorteile der Erfindung

Die Vorrichtung mit dem in Anspruch 1 angegeben Merkmalen hat den Vorteil, daß sie in Verkehrssituationen, die durch eine erhöhte Dynamik gekennzeichnet sind, auch wenn keine unmittelbare Kollisionsgefahr besteht, eine bessere Anpassung des Systemverhaltens an das Verkehrsgeschehen und damit eine Fahrweise ermöglicht, die der vom Fahrer als natürlich empfundenen Fahrverhalten besser entspricht.

Die Besonderheit dieser Vorrichtung besteht in einer Dynamik-Einrichtung, die unter bestimmten Bedingungen im Rahmen der normalen Abstands- und Geschwindigkeitsregelung die Ruckbegrenzung ganz oder teilweise außer Kraft setzt und so eine schnellere Reaktion auf plötzliche Änderungen der Verkehrssituation ermöglicht. Insbesondere gelingt es mit dieser Vorrichtung, Situationen besser zu beherrschen, in denen etwa in Folge eines Wechsels des Zielobjekts ein Wechsel des Stellelements erforderlich ist, also beispielsweise ein Wechsel von bremsen auf beschleunigen oder umgekehrt. Ein typisches Beispiel ist etwa die Situation, daß ein vorausfahrendes Fahrzeug stark verzögert, um einen Abbiegevorgang einzuleiten, und dann beim Abbiegen aus dem Ortungsbereich der Sensoreinrichtung verschwindet, so daß nun ein schnelleres und weiter entferntes Fahrzeug als neues Zielobjekt ausgewählt wird. Die natürliche Reaktion eines menschlichen Fahrers besteht in dieser Situation darin, daß er, sobald das abbiegende Fahrzeug die eigene Spur verlassen hat, die Bremse sofort losläßt und auf das Gaspedal wechselt, um das eigene Fahrzeug zwar moderat aber unverzüglich zu beschleunigen. Durch das Außerkraftsetzen des Ruckbegrenzers wird bei der erfindungsgemäßen Vorrichtung dieses Verhalten nachgebildet, während bei herkömmlichen ACC-Systemen die Funktion des Ruckbegrenzers dazu führt, daß die Bremsverzögerung erst allmählich auf null reduziert wird, bevor ein Wechsel auf das Stellelement des Antriebssystems erfolgt und das Fahrzeug wieder beschleunigt wird. Entsprechendes gilt auch in dem umgekehrten Fall, daß bei relativ starker Beschleunigung des eigenen Fahrzeugs plötzlich ein langsameres Fahrzeug auf die eigene Spur einschert.

Herkömmliche ACC-Systeme sind generell für Fahrten mit relativ hoher Geschwindigkeit auf Autobahnen oder gut ausgebauten Landstraßen gedacht, also für Verkehrssituationen, die durch relativ große Fahrzeugabstände und eine verhältnismäßig geringe Dynamik des Verkehrsgeschehens gekennzeichnet sind. Die Erfindung ist besonders vorteilhaft im Zusammenhang mit Bestrebungen, den Anwendungsbereich des ACC-Systems auf den unteren Geschwindigkeitsbereich auszudehnen, so daß die Vorteile des ACC-Systems auch in dynamischeren Verkehrssituationen genutzt werden können, etwa im Staubetrieb auf Autobahnen oder Landstraßen oder, in weiterer Ausbaustufe, auch im Stadtverkehr. Da in diesen Einsatzbereichen häufiger mit plötzlichen Änderungen der Verkehrssituation, insbesondere mit einem Wechsel des Zielobjekts zu rechnen ist, erweist sich die erfindungsgemäße Vorrichtung hier als besonders nützlich.

Vorteilhafte Ausgestaltungen der Erfindung sind in den Unteransprüchen angegeben.

Ein zweckmäßiges Kriterium für das Außerkraftsetzen oder die Einschränkung der Funktion des Ruckbegrenzers besteht darin, daß ein Zielobjektwechsel erkannt wird und als Reaktion darauf ein Wechsel des Stellelements ausgelöst wird. Wenn der Wechsel des Stellelements in der Richtung erfolgt, daß von einem Eingriff in das Bremssystem auf einen Eingriff in das Antriebssystem umgeschaltet wird, so wird vorzugsweise nur die Ruckbegrenzung für das Bremssystem außer Kraft gesetzt, während sie für das Antriebssystem wirksam bleibt. Dies entspricht dem natürlichen Verhalten eines Fahrers, der bei einem plötzlichen Wegfall eines Hindernisses sofort die Bremse losläßt und dann moderat beschleunigt. Bei einem Wechsel des Stellelementes in umgekehrter Richtung wird entsprechend die Ruckbegrenzung für das Antriebssystem inaktiviert, während sie für das Bremssystem in Kraft bleibt.

Statt die Ruckbegrenzung für die Stellelemente ganz zu inaktivieren, ist es auch möglich, die Wirkung des Ruckbegrenzers lediglich abzuschwächen, indem die Grenzwerte für die Beschleunigung oder Verzögerung oder deren zeitlich Ableitungen im Sinne einer vergrößerung des Spielraums verschoben werden. Das Ausmaß der Verschiebung der Grenzwerte kann dabei auch von einem durch den Fahrer wählbaren Parameter abhängig sein, so daß der Fahrer je nach persönlichen Vorlieben zwischen einer dynamischeren oder einer ruhigeren Fahrweise wählen kann.

Die Erkennung von Verkehrssituationen, in denen der Ruckbegrenzer ganz oder teilweise außer Kraft gesetzt werden sollte, kann alternativ oder zusätzlich auch dadurch erfolgen, daß anhand der von der Sensoreinrichtung gemessenen Abstände und Relativgeschwindigkeiten der georteten Objekte im Rahmen des Regelalgorithmus eine Bewertungsgröße berechnet wird, die ein Maß für die Dringlichkeit der geforderten Beschleunigung oder insbesondere Verzögerung des Fahrzeugs darstellt. Die vom Ruckbegrenzer festgelegten Grenzen können dann mit zunehmender Dringlichkeit zunehmend erweitert werden, bis hin zur völligen Inaktivierung des Ruckbegrenzers.

Die Inaktivierung oder Einschränkung der Funktion des Ruckbegrenzers bleibt vorzugsweise nur während eines begrenzten Zeitraumes wirksam. Im Fall eines Stellelementwechsels kann der Ruckbegrenzer wieder voll aktiviert werden, wenn der Wechsel auf das neue Stellelement vollzogen ist, gegebenenfalls mit einer gewissen zeitlichen Verzögerung. Bei einer dringlichkeitsabhängigen Ansteuerung des Ruckbegrenzers wird die volle Funktion wieder hergestellt, sobald die Dringlichkeit auf ein normales Maß abgenommen hat.

Bei der situationsspezifischen Anpassung der Ruckbegrenzung können auch andere Eingangsgrößen Berücksichtigung finden, beispielsweise der Straßentyp (Autobahn oder innerörtliche Straße), die Fahrgeschwindigkeit oder die Giergeschwindigkeit des Fahrzeugs. Bei hoher Giergeschwindigkeit ist es zweckmäßig, die Funktion des Ruckbegrenzers weniger stark einzuschränken, da Lastwechsel und insbesondere Wechsel zwischen bremsen und beschleunigen sich bei Kurvenfahrten in besonderer Weise auf den Fahrkomfort auswirken.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm einer Vorrichtung zur adaptiven Abstands- und Geschwindigkeitsregelung mit Ruckbegrenzung;
- Figur 2: ein Flußdiagramm zur Erläuterung der Funktionsweise der Vorrichtung;
- Figur 3: ein Geschwindigkeits-Zeit-Diagramm zur Illustration der Wirkungsweise der Vorrichtung; und
- Figur 4: ein zugehöriges Beschleunigungs-Zeit-Diagramm.

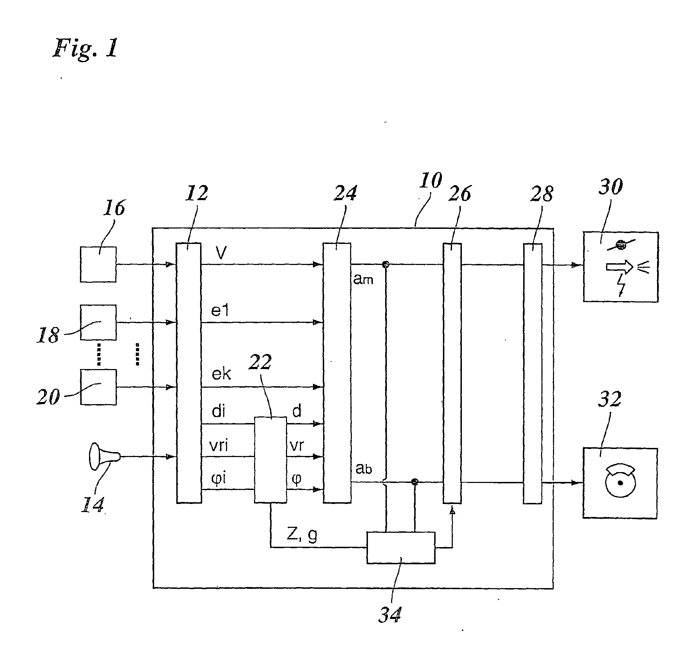

Die in Figur 1 gezeigte Vorrichtung zur adaptiven Abstands- und Geschwindigkeitsregelung umfaßt eine Regeleinrichtung 10, die beispielsweise durch einen oder mehrere Mikrocomputer gebildet wird und über eine Eingangsschaltung 12 Signale von einer Sensoreinrichtung 14 aufnimmt. Bei der Sensoreinrichtung 14 handelt es sich beispielsweise um einen winkelauflösenden Radarsensor, der die Abstände und Relativgeschwindigkeiten sowie die Azimutwinkel von vor dem Fahrzeug befindlichen Objekten mißt. Die Eingangsschaltung 12 nimmt weiterhin Signale von einem Geschwindigkeitssensor 16 zur Messung der Eigengeschwindigkeit V des Fahrzeugs sowie Signale von weiteren Sensoren 18, 20 auf, die hier nur summarisch dargestellt sind und andere für die Regelung relevante Eingangsgrößen el - ek messen, beispielsweise die Giergeschwindigkeit, die Fahrbahnsteigung und dergleichen.

Aus den Signalen der Sensoreinrichtung 14 bildet die Eingangsschaltung 12 für jedes von dieser Sensoreinrichtung geortete Objekt i mindestens drei Eingangsgrößen, die den Objektabstand di, die Relativgeschwindigkeit vri des Objekts sowie den Azimutwinkel ϕi des Objekts angeben. Ein Auswahlmodul 22 überprüft für jedes Objekt anhand der Abstands- und Winkeldaten, ob sich dieses Objekt auf der vom eigenen Fahrzeug befahrenen Fahrspur oder auf einer Nebenspur oder am Fahrbahnrand befindet. Wenn sich mehrere Objekte auf der eigenen Fahrspur befinden, wird unter diesen dasjenige Objekt, das für die Abstandsregelung die höchste Relevanz hat, als Zielobjekt ausgewählt. In der Regel wird es sich bei dem Zielobjekt um das unmittelbar vorausfahrende Fahrzeug handeln, also das Objekt auf der eigenen Fahrspur, das den kleinsten Objektabstand aufweist. Der Abstand d, die Relativgeschwindigkeit vr und der Azimutwinkel ϕ dieses Objekts werden an einen Regler 24 übermittelt, der auch die übrigen Eingangsgrößen V und el - ek aufnimmt.

Sofern ein Zielobjekt vorhanden ist, wird die Geschwindigkeit des Fahrzeugs durch den Regler 24 mit Hilfe bekannter Regelalgorithmen so geregelt, daß das Zielobjekt in einem bestimmten Abstand verfolgt wird. Dieser Abstand ist geschwindigkeitsabhängig und wird zumeist durch eine vom Fahrer wählbare Zeitlücke definiert, die angibt, in welchem zeitlichen Abstand das eigene Fahrzeug dem vorausfahrenden Fahrzeug folgt.

Wenn kein Zielobjekt vorhanden ist, regelt der Regler 24 die Geschwindigkeit des eigenen Fahrzeugs auf eine vom Fahrer gewählte Wunschgeschwindigkeit. Auf diese Wunschgeschwindigkeit wird auch dann geregelt, wenn die Absolutgeschwindigkeit des vorausfahrenden Fahrzeugs größer ist als die Wunschgeschwindigkeit.

Für die Zwecke der Regelung berechnet der Regler 24 Stellgrößen aₘ und a_{b}, die über einen Ruckbegrenzer 26 und eine Ausgangsschaltung 28 an Stellelemente 30, 32 des Antriebssystems bzw. des Bremssystems des Fahrzeugs ausgegeben werden. Die Stellgrößen aₘ und a_{b} werden vom Regler 24 so berechnet, daß die Eigengeschwindigkeit möglichst stabil auf die Wunschgeschwindigkeit bzw. die vom vorausfahrenden Fahrzeug diktierte Sollgeschwindigkeit geregelt wird und daß bei Annäherung an ein Zielobjekt eine sinnvolle Annährungsstrategie verfolgt wird und dann der Sollabstand zum Zielobjekt möglichst stabil geregelt wird. Die Stellgröße aₘ repräsentiert eine positive oder negative Beschleunigung, die mit Hilfe des Stellelements 30 des Antriebssystems erzeugt werden soll, und die Stellgröße a_{b} repräsentiert eine negative Beschleunigung (Verzögerung), die mit Hilfe des Bremssystems erzeugt werden soll.

Der Ruckbegrenzer 26 dient zur Steigerung des Fahrkomforts und hat die Funktion, die vom Regler 24 berechneten Stellgrößen so zu begrenzen, daß extreme, als unkomfortabel empfundene Beschleunigungen oder Verzögerungen des Fahrzeugs vermieden werden. Weiterhin begrenzt der Ruckbegrenzer 26 auch die zeitlichen Änderungen der Stellgrößen aₘ, a_{b}, zumindest die ersten Ableitungen derselben, so daß auch ruckartige Änderungen der Beschleunigung oder der Bremsverzögerung sowie ruckartige Wechsel zwischen bremsen und beschleunigen vermieden werden. Dabei stellt der Ruckbegrenzer 26 auch die Konfliktfreiheit der Stellgrößen aₘ und a_{b} sicher, so daß insbesondere während eines Bremsvorgangs nicht gleichzeitig ein Beschleunigungsbefehl an das Antriebssystem ausgegeben wird. Wenn ein Bremsvorgang erforderlich wird und ein Bremsbefehl an das Stellelement 32 ausgegeben wird, so wird folglich die Ausgabe eine Beschleunigungsbefehls an die Stellelemente 30 des Antriebssystems unterdrückt und umgekehrt. Diese Vorgänge sollen im folgenden als Stellelementwechsel bezeichnet werden.

Die vom Regler 24 berechneten Stellgrößen aₘ und a_{b} werden auch einer Dynamik-Einrichtung 34 zugeführt, die somit in der Lage ist, einen Stellelementwechsel zu erkennen. Außerdem erhält die Dynamik-Einrichtung 34 vom Auswahlmodul 22 ein Signal Z, das einen Wechsel des Zielobjekts anzeigt. Wenn beispielsweise das unmittelbar vorausfahrende Fahrzeug die eigene Fahrspur verläßt, meldet das Auswahlmodul 22 einen Zielobjektverlust, sofern sich kein weiteres Fahrzeug auf der eigenen Spur befindet, oder es wählt als neues Zielobjekt dasjenige Fahrzeug aus, das nun den kleinsten Abstand aufweist. Diese Vorgänge werden durch das Signal Z auch der Dynamik-Einrichtung 34 mitgeteilt.

Im gezeigten Beispiel ist das Auswahlmodul 22 so ausgebildet, daß es jedem georteten Objekt oder zumindest jedem der auf der eigenen Fahrspur befindlichen Objekte anhand der Eingangsgrößen di, vri, ϕi nach einer bestimmten Funktionsvorschrift oder anhand eines gespeicherten mehrdimensionalen Kennfeldes eine Bewertungsgröße zuordnet, die die Relevanz dieses Objekts für die Abstandsregelung angibt. Als Zielobjekt wird dann dasjenige Objekt ausgewählt, für das die Bewertungsgröße am größten ist. Dieses Objekt muß nicht immer das unmittelbar vorausfahrende Fahrzeug sein, sondern kann z. B. auch einmal das übernächste Fahrzeug sein, wenn dieses übernächste Fahrzeug plötzlich bremst und deshalb wegen der stark negativen Relativgeschwindigkeit vri als besonders relevant eingestuft wird. Die Bewertungsgröße g des ausgewählten Zielobjekts, also das Maximum aller objektspezifischen Bewertungsgrößen, wird zusammen mit dem Signal Z an die Dynamik-Einrichtung 34 übermittelt. Anhand dieser Bewertungsgröße g kann somit die Dynamik-Einrichtung 34 erkennen, mit welcher "Dringlichkeit" auf das Zielobjekt reagiert werden muß.

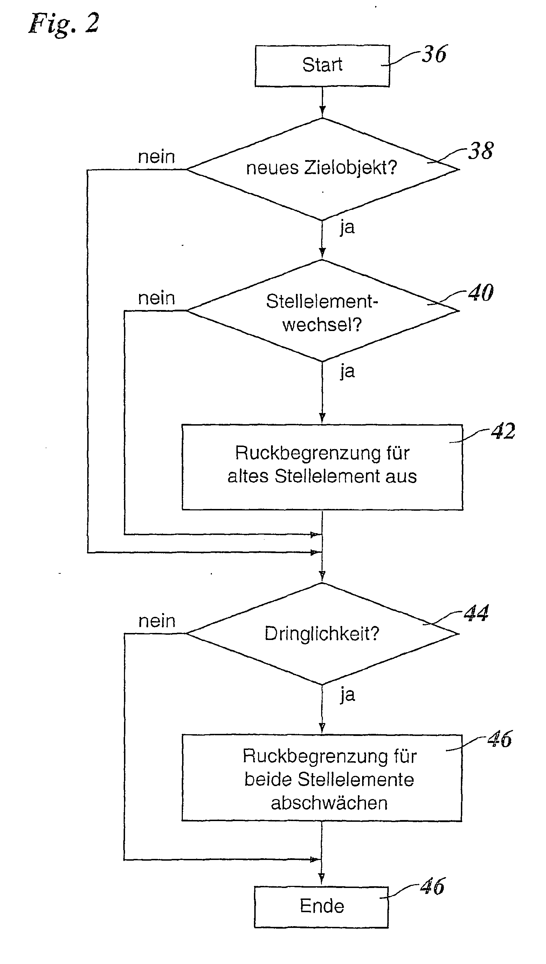

Anhand dieser Informationen steuert die Dynamik-Einrichtung 34 die Funktionsweise des Ruckbegrenzers 26, wie anhand des in Figur 2 gezeigten Flußdiagramms näher erläutert werden soll.

Das Flußdiagramm in Figur 2 beschreibt eine Programmroutine, die von der Dynamik-Einrichtung 34 periodisch ausgeführt wird, beispielsweise synchron mit den Meßzyklen der Sensoreinrichtung 14. Nach dem Start der Programmroutine in Schritt 36 wird in Schritt 38 anhand des Signals Z geprüft, ob ein Zielobjektwechsel stattgefunden hat. Wenn dies der Fall ist, wird in Schritt 40 anhand der Stellgrößen aₘ und a_{b} geprüft, ob - als Reaktion auf den zielobjektwechsel - ein Stellelementwechsel stattfinden sollte. Wenn auch dies der Fall ist, wird in Schritt 42 die Ruckbegrenzung für das bisher aktive Stellelement ausgeschaltet. Wenn also z. B. bisher die Bremse aktiv war und nun wieder beschleunigt werden soll, so wird die Ruckbegrenzung für das Stellelement 32 (Bremse) ausgesetzt, mit der Folge, daß der Stellbefehl für die Bremse sofort auf 0 abnimmt und nicht mit einer begrenzten zeitlichen Änderungsrate allmählich auf 0 reduziert wird, wie es sonst aufgrund der Wirkung des Ruckbegrenzers 26 der Fall wäre. Die Ruckbegrenzung für das neue Stellelement, im hier betrachteten Beispiel also für das Stellelement 30, bleibt indessen aktiv, so daß die Beschleunigung des Fahrzeugs sanft einsetzt, wie es im Hinblick auf den Fahrkomfort wünschenswert ist.

Wenn der Stellelementwechsel vollzogen ist, wird nach Ablauf einer gewissen Zeitspanne die Ruckbegrenzung für das alte Stellelement (Bremse) wieder aktiviert, obgleich dies im Flußdiagramm nicht im einzelnen dargestellt ist.

Wenn die Überprüfung in Schritt 38 oder 40 ein negatives Ergebnis hat, wird der Schritt 42 übersprungen, d. h. der Ruckbegrenzer bleibt im vollen Umfang aktiv.

In Schritt 44 wird nun anhand der Bewertungsgröße g geprüft, ob mit einer besonderen Dringlichkeit auf das aktuelle Zielobjekt reagiert werden muß. Diese Prüfung findet im gezeigten Beispiel nicht nur nach einem Stellelementwechsel statt, sondern auch dann, wenn das bisherige Zielobjekt weiter verfolgt wird. So können beispielsweise auch Situationen erfaßt werden, in denen das Zielobjekt plötzlich seinen Bewegungszustand ändert, beispielsweise eine Vollbremsung einleitet.

Wenn in Schritt 44 eine erhöhte Dringlichkeit festgestellt wurde, so wird in Schritt 46 die Ruckbegrenzung für beide Stellelemente je nach Dringlichkeit mehr oder minder abgeschwächt. Mit "abschwächen" ist hier gemeint, daß die im Ruckbegrenzer 26 eingestellten Grenzwerte für die positive Beschleunigung und deren zeitliche Ableitung erhöht werden, und zwar gemäß einer monoton steigenden Funktion in Abhängigkeit von der durch die Bewertungsgröße g repräsentierten Dringlichkeit, und daß die Grenzwerte für die negativen Beschleunigungen und deren zeitliche Ableitungen gemäß einer monoton fallenden Funktion in Abhängigkeit von g verringert werden. Im Extremfall, bei sehr hohen Werten von g kann es dabei auch zu einer vollständigen Abschaltung des Ruckbegrenzers kommen. Durch diese Berücksichtigung der Dringlichkeit bei der Ruckbegrenzung wird die Vorrichtung in die Lage versetzt, flexibler und mit kürzerer Ansprechzeit auf dynamische Änderungen der Verkehrssituation zu reagieren, ohne daß im Normalfall der Komfort beeinträchtigt wird.

Wenn in Schritt 44 keine erhöhte Dringlichkeit festgestellt wird, so wird der Schritt 46 übersprungen und die Programmroutine ist mit Schritt 48 beendet.

Das Auswahlmodul 22, der Regler 24, der Ruckbegrenzer 26 und die Dynamik-Einrichtung 34 sind in Figur 1 lediglich zu Illustrationzwecken als getrennte Blöcke dargestellt worden. In der Praxis können diese Funktionen auch von einem einzigen Mikroprozessor ausgeführt werden.

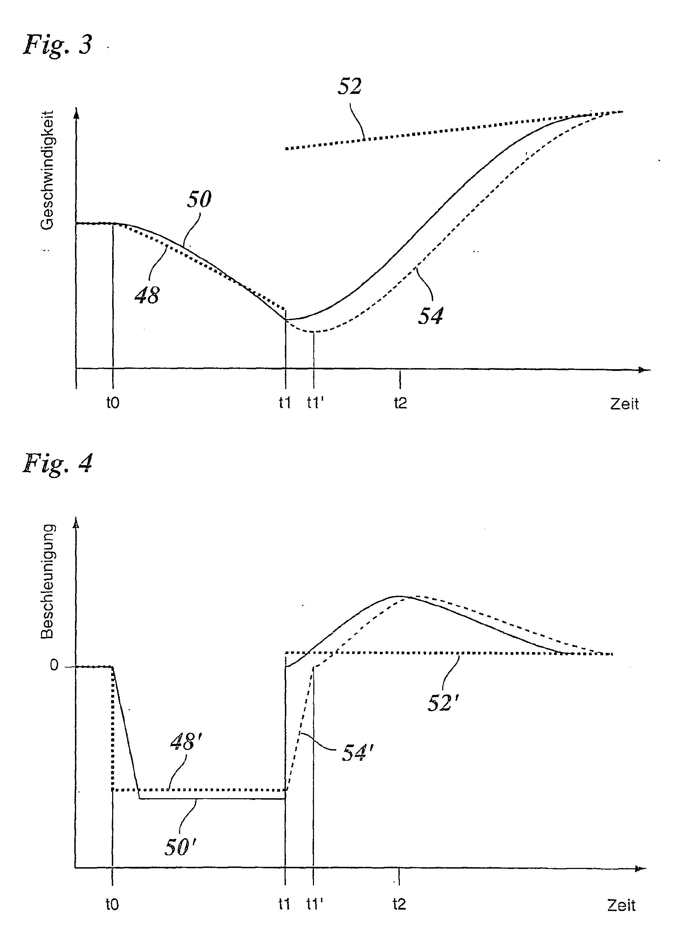

Der mit der Dynamik-Einrichtung 34 erreichte Effekt soll nun anhand des Geschwindigkeits-Zeit-Diagramms in Figur 3 und des Beschleunigungs-Zeit-Diagramms 4 an einem Beispiel erläutert werden.

In Figur 3 repräsentiert die fett und punktiert eingezeichnete Kurve 48 die Geschwindigkeit eines ersten Zielobjekts, beispielsweise eines unmittelbar vorausfahrenden Fahrzeugs, das bis zur Zeit t0 mit konstanter Geschwindigkeit fährt und dann stark abbremst. Die Kurve 48' in Figur 4 illustriert die entsprechende Beschleunigung. Man erkennt, daß die Verzögerung des Zielobjekts zur Zeit t0 schlagartig einsetzt. Der Regler 24 reagiert darauf mit einer Verzögerung des eigenen Fahrzeugs, z. B. mit Ausgabe der Stellgröße a_{b} an das Bremssystem. Der Ruckbegrenzer 26 sorgt jedoch dafür, daß die Bremsverzögerung nur allmählich, mit einer begrenzten zeitlichen Änderungsrate auf den endgültigen Wert zunimmt. Dies wird durch die Geschwindigkeitskurve 50 in Figur 3 und die entsprechende Beschleunigungskurve 50' in Figur 4 illustriert.

Zum Zeitpunkt t1 geht das Zielobjekt verloren, beispielsweise weil es abgebogen ist oder auf eine Nebenspur gewechselt hat. Das Auswahlmodul 22 wählt nun als neues Zielobjekt ein Fahrzeug aus, das mit höherer Geschwindigkeit fährt und sanft beschleunigt, wie durch die Kurven 52 und 52' angegeben wird. Wenn in dieser Situation der Ruckbegrenzer uneingeschränkt aktiv bliebe, so würde die Bewegung des eigenen Fahrzeugs durch die gestrichelt eingezeichnete Geschwindigkeitskurve 54 in Figur 3 und die entsprechende Beschleunigungskurve 54' in Figur 4 repräsentiert. Obgleich das Hindernis, also das bisherige Zielobjekt, längst nicht nicht mehr vorhanden ist, hätte die Funktion des Ruckbegrenzers zur Folge, daß das eigene Fahrzeug noch weiter gebremst würde, und die Bremsverzögerung würde erst allmählich, mit begrenzter Anstiegsrate wieder auf 0 abnehmen, wie an der Kurve 54' zu erkennen ist. Demzufolge würde die Geschwindigkeit des eigenen Fahrzeugs erst zum Zeitpunkt tl' ihr Minimum erreichen (Figur 3). Erst dann würde eine Beschleunigung des eigenen Fahrzeugs einsetzen und die Geschwindigkeit allmählich an die des neuen Zielobjekts (Kurven 52, 52') angepaßt. Dieses verspätete Reagieren auf den Wegfall des Hindernisses wird von vielen Fahrern (und auch vom Nachfolgeverkehr) als irritierend und störend empfunden.

Bei der hier beschriebenen Vorrichtung erkennt nun zum Zeitpunkt t1 die Dynamik-Einrichtung 34 den Zielobjektwechsel und den vom Regler 24 befohlenen Stellelementwechsel (Schritte 38 und 40 in Figur 2), und daraufhin wird der Ruckbegrenzer 26 bezüglich des Bremssystems inaktiviert. Die Bremsverzögerung wird daher schlagartig auf 0 abgebaut. Dies äußert sich durch einen Knick in der Geschwindigkeitskurve 50 in Figur 3 und einen Sprung in der Beschleunigungskurve 50' in Figur 4. Der damit verbundene leichte "Ruck" ist unter diesen besonderen Bedingungen durchaus erwünscht. Danach wird sofort mit einer zunächst sanft einsetzenden und dann stärker werdenden Beschleunigung des eigenen Fahrzeugs begonnen, so daß die Geschwindigkeit des neuen Zielobjekts entsprechend früher erreicht wird. Durch diese Maßnahme wird eine Systemreaktion erreicht, die dem natürlichen Fahrverhalten besser entspricht und den Verkehrsfluß begünstigt. Zum Zeitpunkt t2 wird der Ruckbegrenzer 26 wieder in vollem Umfang aktiviert, so daß auf spätere Änderungen des Bewegungszustands des neuen Zielobjekts sanft und mit hohem Komfort reagiert würde.

## Patentansprüche

1. Vorrichtung zur adaptiven Abstands- und Geschwindigkeitsregelung bei Kraftfahrzeugen, mit einer Sensoreinrichtung (14) zur Messung von Abstand und Relativgeschwindigkeit eines vor dem Fahrzeug befindlichen Zielobjekts, einer Regeleinrichtung (10), die eine Abstandsregelfunktion zur Regelung auf einen bestimmten Abstand zum Zielobjekt aufweist und zeitlich veränderliche Stellgrößen (aₘ, a_{b}) an Stellelemente (30, 32) des Antriebs- und/oder Bremssystms des Fahrzeugs ausgibt, und einem Ruckbegrenzer (26) zur Begrenzung der Stellgrößen und/oder der zeitlichen Änderungen derselben, **gekennzeichnet durch** eine Dynamik-Einrichtung (34), die plötzliche Änderungen der von der Sensoreinrichtung (14) erfassten Verkehrssituation erkennt und situationsabhängig, bei fortgesetzter Abstands- und Geschwindigkeitsregelung, die Funktion des Ruckbegrenzers (26) einschränkt.

2. Vorrichtung nach Anspruch 1, **dadurch gekennzeichnet, daß** ein Auswahlmodul (22), das dazu dient, das Zielobjekt für die Abstandsregelung auszuwählen, dazu ausgebildet ist, der Dynamik-Einrichtung (34) einen Wechsel des Zielobjekts zu signalisieren, und daß dieser Zielobjektwechsel für die Dynamik-Einrichtung (34) ein Kriterium zur Erkennung einer plötzlichen Änderung der Verkehrssituation ist.

3. Vorrichtung nach Anspruch 1 oder 2, **dadurch gekennzeichnet, daß** die Dynamik-Einrichtung (34) die dem Ruckbegrenzer (26) zugeführten Stellgrößen (aₘ, a_{b}) empfängt und anhand dieser Stellgrößen einen Stellelementwechsel als Kriterium für die plötzliche Änderung der Verkehrssituation erkennt.

4. Vorrichtung nach den Ansprüchen 2 und 3, **dadurch gekennzeichnet, daß** die Dynamik-Einrichtung die Funktion des Ruckbegrenzers (26) einschränkt oder aussetzt, wenn unmittelbar im Anschluß an einen Zielobjektwechsel ein Stellelementwechsel stattfindet.

5. Vorrichtung nach Anspruch 4, **dadurch gekennzeichnet, daß** die Dynamik-Einrichtung bei einem Stellelementwechsel jeweils die Ruckbegrenzung nur für das alte Stellelement aufhebt oder einschränkt.

6. Vorrichtung nach Anspruch 4 oder 5, **dadurch gekennzeichnet, daß** die Dynamik-Einrichtung mit zeitlicher Verzögerung nach dem Stellelementwechsel den Ruckbegrenzer (26) wieder in vollem Umfang aktiviert.

7. Vorrichtung nach einem der vorstehenden Ansprüche, **dadurch gekennzeichnet, daß** der Ruckbegrenzer (26) die durch die Stellgrößen (aₘ, a_{b}) repräsentierten positiven und negativen Beschleunigungen des Fahrzeugs sowie deren zeitliche Ableitungen auf jeweils zugehörige Grenzwerte begrenzt und daß die Einschränkung der Funktion des Ruckbegrenzers in einer Veränderung dieser Grenzwerte besteht.

8. Vorrichtung nach Anspruch 7, **dadurch gekennzeichnet, daß** die Dynamik-Einrichtung die Grenzwerte in Abhängigkeit von einer Bewertungsgröße (g) verändert, die ein Maß für die Dynamik der Verkehrssituation ist.

## Claims

1. Device for adaptive distance and speed control in motor vehicles, having a sensor device (14) for measuring the distance and relative speed of a target object located in front of the vehicle, a control device (10) which has a distance control function for adjusting to a specific distance from the target object and outputs manipulated variable values (aₘ, a_{b}) which change over time to actuating elements (30, 32) of the drive system and/or brake system of the vehicle, and a jolt limiter (26) for limiting the manipulated variable values and/or their changes over time, **characterized by** a dynamic device (34) which detects sudden changes to the traffic situation which has been sensed by the sensor device (14) and limits the function of the jolt limiter (26) as a function of the situation, with continued distance and speed control.

2. Device according to Claim 1, **characterized in that** a selection module (22), which serves to select the target object of the distance control, is designed to signal a change of the target object to the dynamic device (34), and **in that** this changing of the target object for the dynamic device (34) is a criterion for the detection of a sudden change in the traffic situation.

3. Device according to Claim 1 or 2, **characterized in that** the dynamic device (34) receives the manipulated variable values (aₘ, a_{b}) which are fed to the jolt limiter (26) and detects, by means of these manipulated variable values, a change of the actuating element as a criterion for the sudden change in the traffic situation.

4. Device according to Claims 2 and 3, **characterized in that** the dynamic device limits or suspends the function of the jolt limiter (26) if the actuating element is changed directly after the target object is changed.

5. Device according to Claim 4, **characterized in that** when the actuating element is changed the dynamic device respectively cancels or restricts the jolt limitation only for the old actuating element.

6. Device according to Claim 4 or 5, **characterized in that** the dynamic device activates the jolt limiter (26) again to the full extent with a time delay after the actuating element is changed.

7. Device according to one of the preceding claims, **characterized in that** the jolt limiter (26) limits the positive and negative accelerations of the vehicle which are represented by the manipulated variable values (aₘ, a_{b}) as well as their derivatives over time to respectively associated limiting values, and **in that** the limitation of the function of the jolt limiter consists in changing these limiting values.

8. Device according to Claim 7, **characterized in that** the dynamic device changes the limiting values as a function of an evaluation variable (g) which is a measure of the dynamics of the traffic situation.

## Revendications

1. Dispositif de régulation adaptative de distance dans des véhicules automobiles, comprenant une installation de capteur (14) pour mesurer la distance et la vitesse relative d'un objet cible se trouvant devant le véhicule, une installation de régulation (10) qui présente une fonction de régulation de distance pour une régulation sur une distance définie par rapport à l'objet cible et génère des grandeurs de réglage variables dans le temps (aₘ, a_{b}) sur des éléments de réglage (30, 32) du système d'entraînement et/ou de freinage du véhicule, et un limiteur de secousse (26) pour limiter les grandeurs de réglage et/ou les modifications temporelles elles-mêmes,
**caractérisé en ce qu'**
une installation de dynamique (34) reconnaît des modifications soudaines de la situation de circulation détectée par l'installation de capteur (14) et restreint la fonction du limiteur de secousse (26) en fonction de la situation, dans le cas d'une régulation de distance et de vitesse en continu.

2. Dispositif selon la revendication 1,
**caractérisé en ce qu'**
un module de sélection (22) servant à sélectionner l'objet cible pour la régulation de distance est réalisé de manière à signaler à l'installation dynamique (34) un changement de l'objet cible, et ce changement d'objet cible est, pour l'installation dynamique (34), un critère de reconnaissance d'un changement soudain de la situation de circulation.

3. Dispositif selon la revendication 1 ou 2,
**caractérisé en ce que**
l'installation dynamique (34) reçoit les grandeurs de réglage (aₘ, a_{b}) amenées par le limiteur de secousse (26) et, à l'aide de ces grandeurs de réglage, reconnaît un changement de l'élément de réglage comme critère pour le changement soudain de la situation de circulation.

4. Dispositif selon les revendications 2 et 3,
**caractérisé en ce que**
l'installation dynamique restreint la fonction du limiteur de secousse (26) ou l'arrête lorsqu'un changement d'élément de réglage se produit directement en liaison avec un changement d'objet cible.

5. Dispositif selon la revendication 4,
**caractérisé en ce que**
dans le cas d'un changement d'élément de réglage, l'installation dynamique annule ou restreint à chaque fois la limitation de secousse uniquement pour l'ancien élément de réglage.

6. Dispositif selon la revendication 4 ou 5,
**caractérisé en ce que**
l'installation dynamique réactive entièrement le limiteur de secousse (26) avec une décélération dans le temps après le changement d'élément de réglage.

7. Dispositif selon l'une des revendications précédentes,
**caractérisé en ce que**
le limiteur de secousse (26) limite les accélérations positives et négatives du véhicule représentées par les grandeurs de réglage (aₘ, a_{b}) ainsi que leurs dérivations dans le temps sur des valeurs limites à chaque fois correspondantes, et la limitation de la fonction du limiteur de secousse se compose d'une modification de ces valeurs limites.

8. Dispositif selon la revendication 7,
**caractérisé en ce que**
l'installation dynamique modifie les valeurs limites en fonction d'une grandeur de pondération (g) qui est une mesure pour la dynamique de la situation de circulation.
